(19) **Europäisches Patentamt / European Patent Office / Office européen des brevets**

(11) **EP 4 764 689 A1**

(12) **EUROPEAN PATENT APPLICATION**

(43) Date of publication:
24.06.2026 Bulletin 2026/26

(21) Application number: 25173922.3

(22) Date of filing: 02.05.2025

(51) International Patent Classification (IPC):
*G02F 1/35* (2006.01)     *G02F 1/365* (2006.01)

(52) Cooperative Patent Classification (CPC):
**G02F 1/365; G02F 1/3536;** G02F 2203/15;
G02F 2203/26; G02F 2203/54; G02F 2203/56

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **20.12.2024 DE 102024139267**

(71) Applicant: **Enlightra Sàrl**
**1020 Renens (CH)**

(72) Inventor: **The designation of the inventor has not yet been filed**

(74) Representative: **Fuchs Patentanwälte
Partnerschaft mbB
Tower 185
Friedrich-Ebert-Anlage 35-37
60327 Frankfurt am Main (DE)**

(54) **HIGH-CONVERSION-EFFICIENCY INTEGRATED FREQUENCY COMB DEVICE**

(57)     A high-conversion-efficiency integrated frequency comb device (100; 200; 310a - 310c) comprises at least one micro-resonator (120; 220) configured to receive pump laser light from at least one pump laser source, convert at least partially the received pump laser light for generating a laser frequency comb, and output frequency comb light based on the produced laser frequency comb. The micro-resonator (120; 220) comprises at least one closed-circuit waveguide (122; 222) integrated in a semi-conductor topography of the micro-resonator (120; 220). The closed-circuit waveguide (122; 222) comprises at least one structure for producing periodic perturbation (124; 224) configured to produce mode hybridization via coupling of forwards and backwards travelling modes in the closed-circuit waveguide (122; 222) by means of rapid, in particular sub-wavelength, modulation of a propagation constant of light propagating in the closed-circuit waveguide (122; 222). The structure for producing periodic perturbation (124; 224) has been designed with respect to at least one of an intended width, in terms of comb lines, of the frequency comb and/or an intended intensity distribution within a target width, in terms of comb lines, of the frequency comb, based at least partially on the stipulation that a dispersion-loss operator to achieve an ideally flat microcomb according to an exact solution of a generalized Lugiato-Lefever Equation exists in the form $[i\hat{D} + \hat{K}]$, and, as a function of resonator mode index $\mu$, the dispersion-loss operator takes the following generic form:

$$\hat{D}(\mu = 0) = h$$

$$\hat{D}(\mu \neq 0) = a + b|\mu| + c\mu^2 + d_3|\mu|^3 + \cdots + d_\infty|\mu|^\infty$$

$$\hat{K}(\mu = 0) = p$$

$$\hat{K}(\mu \neq 0) = q + r|\mu| + s\mu^2 + u_3|\mu|^3 + \cdots + u_\infty|\mu|^\infty$$

, wherein $a, b, c, d_3 \ldots d_\infty, h, p, q, r, s, u_3 \ldots u_\infty$ are constants, and $\mu \leq N/2$ for $N$ being the number of intended comb lines apart from a potential comb line corresponding to the pump laser light.

# Fig. 1

100

**Description**

The disclosure relates to a high-conversion-efficiency integrated frequency comb device. The disclosure further relates to a semiconductor device, a use of a high-conversion-efficiency integrated frequency comb device, and a method of manufacturing a high-conversion-efficiency integrated frequency comb device.

Background of the Disclosure

Frequency combs have become widespread in laboratory, industrial and commercial use, including optical telecommunication networks. Moreover, miniaturization of frequency comb arrangements has been taking place. By use of diode laser sources and micro-resonator rings, for example, implementations of frequency comb arrangements on semiconductor chips have been achieved.

Efficiency of a frequency comb generation by conversion of pump laser light in a micro-resonator as well as spectral characteristics of a generated frequency comb depend sensitively on optical conditions provided in the micro-resonator ring. Furthermore, for many applications, accurate adjustment of the spectral characteristics of a frequency comb to an intended use is vital.

Therefore, there exists a need for integrated frequency comb devices having a high conversion efficiency and improved accuracy with respect to frequency comb characteristics.

Brief Summary of the Disclosure

Accordingly, there is provided a high-conversion-efficiency integrated frequency comb device according to claim 1, a semiconductor device according to claim 11, a use of a high-conversion-efficiency integrated frequency comb device according to claim 12, and a method of manufacturing a high-conversion-efficiency integrated frequency comb device according to claim 14.

Laser light is a coherent electromagnetic wave signal. With coherent light, it is possible to send or receive information, either in the form of data communications or measurements of distance, speed, chemical content, etc. Conventional lasers produce one (single) harmonic wave signal, or: one color of light. For data communications this represents one 'channel', like a television channel. For laser light, this is referred to as a "line". Techniques are known which take one laser line and transform it into a number N of distinct laser lines. The mechanism behind this generation of new laser lines is the so-called Kerr nonlinearity. As a consequence of this nonlinearity, every new laser line that is generated appears at exact frequency intervals across the signal spectrum. The new laser lines also have a fixed phase relationship with the initial, so-called 'pump', laser line. This means all N channels are mutually coherent, and information can be sent and received using either individual channels, or all channels at the same time. This type of laser spectrum is called a "comb", and a "microcomb" if it is sourced from a micro-engineered, or nano-engineered, component, so-called micro-photonics or nano-photonics.

A typical component of a microcomb generator is a 'micro-resonator', which is a closed-circuit photonic waveguide in close proximity to an input/output 'bus' photonic waveguide, where energy between the resonator and the bus waveguide is 'coupled'. In this way, the micro-resonator is driven, or pumped, by the pump laser. When pumped with light within a tolerance range around an effective, potentially Kerr-modified 'resonance' frequency (for example, the tolerance range may correspond to the half-maximum width of the resonance and account for the Kerr frequency-shift of the resonance center), the power inside the micro-resonator typically becomes hundreds to thousands of times higher than in the bus waveguide. This allows light within the resonator to reach the threshold required for the Kerr nonlinearity in the solid waveguide core-material, launching nonlinear frequency conversion processes such as the four-wave mixing, FWM, which generates new laser lines. Every generated laser line is also natively spaced in frequency by approximately the frequency interval between the resonances, or 'modes', of the resonator.

The Kerr nonlinearity, fundamentally speaking, serves to 'sharpen' small mounds, or spurs, in the travelling power-profile of light. Eventually, this causes light travelling around the resonator to form into separate clumps, or pulses (stable dissipative temporal patterns). In the domain of wave frequency (or wavelength), this corresponds to new lines appearing from the noise or quantum background. The energy or power in these new lines comes from the power supplied from the input pump line. This is called 'conversion'. When the lines generated for the purpose of a target application contain a large fraction of the power supplied by the pump, this represents a 'high conversion efficiency' (high CE).

Reaching high CE in the generation of a microcomb via the Kerr nonlinearity typically faces two major limitations. Firstly, the process of conversion of energy from the input pump line at the initial frequency to new lines at different frequencies, through FWM, depends on the new lines being continuously phase-matched to the pump line, meaning the electromagnetic wavefronts are always staying together, as light travels around the resonator in time and space. In the waveguide core-material, light with a different wavelength or frequency travels at a different phase velocity. This is known as "dispersion". Dispersion results in lines generated at a larger frequency difference with the pump becoming less phase-matched. The further the difference in frequency, the less phase-matched the generated lines become, and the less efficient the conversion process becomes. This drop in FWM efficiency determines the spectral profile of the microcomb as a whole. If the dispersion is improperly prepared for the target microcomb, energy may either be too concentrated in a narrow spectral region, or conversely spread out over too large a region. This particularly results in either too many or too few lines being generated relative to the target. This ultimately restricts the CE between the pump and the intended microcomb spectral profile. Secondly, the Kerr nonlinearity also causes a shift in the phase of a travelling lightwave in proportion to its power. This may result in an improper phase match between the pump line and the generated microcomb as a whole. For existing 'soliton microcombs' this implies a very low CE, regardless of the dispersion profile.

According to an aspect of the disclosure, a high-conversion-efficiency integrated frequency comb device is provided. The high-conversion-efficiency integrated frequency comb device comprising at least one micro-resonator configured to receive pump laser light from at least one pump laser source, convert at least partially the received pump laser light for generating a laser frequency comb, and output frequency comb light based on the produced laser frequency comb. The micro-resonator comprises at least one closed-circuit waveguide integrated in a semi-conductor topography of the micro-resonator. The closed-circuit waveguide comprises at least one structure for producing periodic perturbation, such as a Bragg grating, configured to produce mode hybridization via coupling of forwards and backwards travelling modes in the closed-circuit waveguide by means of rapid, in particular sub-wavelength, modulation of a propagation constant of light propagating in the closed-circuit waveguide. The structure for producing periodic perturbation has been designed with respect to at least one of an intended width, in terms of comb lines, of the frequency comb and/or an intended intensity distribution within a target width, in terms of comb lines, of the frequency comb, based at least partially on the stipulation that a dispersion-loss operator to achieve an ideally flat microcomb according to an exact solution of a generalized (in particular, not limited to including purely quadratic dispersion) Lugiato-Lefever Equation exists in the form $[i\hat{D} + \hat{K}]$, and, as a function of resonator mode index $\mu$, the dispersion-loss operator takes the following generic form:

$$\widehat{D}(\mu = 0) = h$$

$$\widehat{D}(\mu \neq 0) = a + b|\mu| + c\mu^2 + d_3|\mu|^3 + \cdots + d_\infty|\mu|^\infty$$

$$\widehat{K}(\mu = 0) = p$$

$$\widehat{K}(\mu \neq 0) = q + r|\mu| + s\mu^2 + u_3|\mu|^3 + \cdots + u_\infty|\mu|^\infty$$

, wherein *a, b, c, d_3 ... d_∞, h, p, q, r, s, u_3 ... u_∞* are constants, and $\mu \leq N/2$ for *N* being the number of intended comb lines apart from a potential comb line corresponding to the pump laser light.

For $\mu \neq 0$ and $\leq N/2$, the dispersion-loss operator may be assumed as, at least approximately, parabolic. In particular, each of the constants $d_3 ... d_\infty u_3 ... u_\infty$ may be set as equal to zero. In that case, for $\mu \leq N/2$, the dispersion-loss operator (effectively) has the following generic form:

$$\widehat{D}(\mu = 0) = h$$

$$\widehat{D}(\mu \neq 0) = a + b|\mu| + c\mu^2$$

$$\widehat{K}(\mu = 0) = p$$

$$\widehat{K}(\mu \neq 0) = q + r|\mu| + s\mu^2$$

Setting each of the constants $d_3 ... d_\infty, u_3 ... u_\infty$ equal to zero yields a comparatively simple dispersion-loss operator, thus facilitating easy processing.

Alternatively, one or more of the constants $d_3 ... d_\infty, u_3 ... u_\infty$ may correspond to a polynomial approximation of a functional form which is approximately parabolic near the center, such as Gaussian, sinc, or hyperbolic sech, as the first two polynomial orders of such a functional form prevail near the center. Where one or more of the constants $d_3 ... d_\infty, u_3 ... u_\infty$ correspond to a polynomial approximation of such a functional form, improved accuracy relative to a purely parabolic dispersion-loss operator is facilitated in practically relevant scenarios.

The dispersion operator, $\hat{D}$, may refer to one branch of the hybridized modes. A dispersion operator of any non-hybridized mode may remain unchanged.

The disclosure relies on the inventors' finding that by precisely engineering the phase velocity of generated lines, on a line-by-line basis, it is possible to maximize the CE to target generated microcomb lines and to minimize the CE to lines outside the target. This represents the synthesis of a "meta-dispersion" profile for the micro-resonator.

In this way, the aforesaid two barriers to high CE can be mitigated or overcome, respectively. Firstly, phase-matching can be ensured and, therefore, high CE to not more or less than the exact target number of lines. Secondly, phase matching under the additional Kerr effect by the desired intracavity fields can be optimized and, therefore, CE between the input pump laser line and the generated microcomb as a whole.

Furthermore, in addition to high CE, the ability to tune the phase-matching of individual resonator modes facilitates tailoring the overall shape of the microcomb. For example, some lines can be made to have a higher power than others, as desired, for example, in accordance with a predefined (requirement) specification. Most usefully, a flat microcomb shape where every generated application line has a similar output power is made possible.

In order for the microcomb to emerge spontaneously, i.e., without the need for external stimulation, there must be a regime that is reachable with the pump laser where degenerate FWM can occur, popularly known as "modulation instability" (MI). This initial growth of comb lines through MI is the spark which initiates the formation of the main microcomb. It requires at least two resonator modes to have the correct phase-matching relationship relative to the pumped mode. In examples of the present disclosure, at least one mode has its phase velocity individually engineered to act as "helper mode" to provide for the spontaneous initiation of the microcomb. The helper mode exists as a part of the overall meta-dispersion profile.

The disclosure relies in particular on the inventors' finding that there exists a dispersion-loss operator (meta-dispersion) in the form $[i\hat{D} + \hat{K}]$ to achieve an ideally flat microcomb according to an exact solution of a generalized Lugiato Lefever Equation (LLE). The solution may not include the helper modes. As a function of resonator mode index $\mu$, the operator takes the aforesaid generic form.

The dispersion-loss operator may additionally take the following generic form for $\mu > N/2$:

$$\widehat{D}(\mu) = e$$

$$\widehat{K}(\mu) = v$$

, wherein $e, v$ are constants. Including the range $\mu > N/2$ in the dispersion-loss operator facilitates improved accuracy in practically relevant scenarios.

The coupled nonlinear equations, within which the aforementioned ideal meta-dispersion and loss operators exist, takes the following form:

$$\frac{\partial}{\partial t}A_\mu = -\left[\widehat{K}_\mu + i\delta\omega_\mu - 2ig_0\sum_{j=1}^{N}|B_j|^2\right]A_\mu + ig_0\sum_{j,k}A_jA_kA_{j+k-\mu}^* + i\gamma_\mu B_\mu + \delta_0\sqrt{\frac{\kappa_{ex0}}{T}P_A}$$

$$\frac{\partial}{\partial t}B_\mu = -\left[\widehat{K}_\mu + i\delta\omega_\mu - 2ig_0\sum_{j=1}^{N}|A_j|^2\right]B_\mu + ig_0\sum_{j,k}B_jB_kB_{j+k-\mu}^* + i\gamma_\mu A_\mu + \delta_0 e^{i\phi}\sqrt{\frac{\kappa_{ex0}}{T}P_B}$$

This is the bi-directional coupled LLE, describing the evolution over time $t$ of two 1-dimensional optical fields $A_\mu$ and $B_\mu$, here in units $\left[\sqrt{W}\right]$, travelling in the forwards and backwards directions respectively, existing in resonator mode index $\mu$. The Kerr nonlinear mode coupling coefficient, determined by the photonic waveguide material and geometric properties, is given by $g_0$ in units of [Hz/W]. $\kappa_{ex0}$ is the energy coupling rate, in units [Hz] between the bus waveguide and the resonator at resonator mode index 0, the pumped mode. T is the round-trip time of any pulse inside the resonator, in units [s]. $P_A$ and $P_B$ are the pump laser power in the bus waveguide, incident to the resonator in the forwards and backwards directions respectively, in units [W], and the travelling phase difference between the forwards and backwards pump waveforms is given by $\phi$. The Kronecker Delta function $\delta_0$, centered at the pumped resonator mode, represents the frequency/mode domain form of a continuous-wave pump laser.

The frequency difference between each microcomb oscillating optical mode and its corresponding resonator resonance mode center-frequency is given by $\delta\omega_\mu$ for each resonator mode index $\mu$ in units [Hz]. This value contains both the relative 'detuning' in frequency between the pump laser and the pumped resonance center frequency, and the dispersion of each mode $\mu$ overall. $\gamma_\mu$ is the forwards-backwards energy coupling rate for each comb mode $\mu$, provided by the structure for producing periodic perturbation causing mode splitting (hybridization) in units [Hz]. The effective meta-dispersion operator for microcomb generation is thus $\hat{D}_\mu \simeq \delta\omega_\mu \pm \gamma_\mu$, wherein advantageously $\gamma_\mu >> \hat{K}_\mu$.

$\hat{K}_\mu$ is the rate of energy dissipation corresponding to each mode index $\mu$, in units [Hz]. Any possible engineering method of tailoring this particular operator on a mode-by-mode basis is not presented in this document. For explanatory purposes here, $\hat{K}_\mu$ is only determined broadly by engineering the physical distance separating the bus waveguide and the resonator waveguide, as it is in already existing microresonator devices.

Furthermore, the phase velocity of individual modes can be changed with "coupling". When two harmonic modes are coupled together, they correspondingly create two new "hybrid" modes (new eigenmodes) spaced apart in frequency by the coupling rate - the frequency of energy exchange between the two base modes. This is also referred to as 'mode splitting'. By tuning the eigen frequency of hybridized modes the disclosure facilitates creating a meta-dispersion profile.

Mode hybridization is achievable through the coupling of forwards and backwards propagating modes, creating two new 'split' eigenmodes that represent standing electromagnetic waves in the resonator. According to the disclosure, coupling forwards and backwards modes is facilitated by introducing a rapid modulation in the propagation constant of the travelling lightwaves equal to approximately double the natural propagation constant. This rapid modulation of the propagation constant is provided by a rapid (spatial, relative to the propagation velocity of the light), sub-wavelength, structural modulation of the effective refractive index of the photonic waveguide (a "Bragg grating") and/or another structure for producing periodic perturbation. The structure for producing periodic perturbation, such as a Bragg grating, may for example take the form of a modulation of the photonic waveguide width, that is, a "corrugation"; the placement of periodic structures adjacent to the waveguide; or a periodic interruption of the waveguide core material entirely or with elliptical holes, i.e. a longitudinal "photonic crystal" waveguide.

The disclosure further relies on the inventors' finding that a laser resonator having optical characteristics which have been engineered in accordance with the present disclosure is particularly suited for implementation as a micro-resonator in an integrated semiconductor topography. In particular, manufacture of a correspondingly engineered micro-resonator is enabled using conventional techniques of semiconductor device production, such as depositing of matter, ablating of matter, masking, etc.

In the context of the disclosure, the term "semiconductor topography" denotes an on-chip arrangement of the micro-resonator, which is not restricted to a manufacture of the micro-resonator (exclusively) out of semiconducting material. Instead, it also encompasses micro-resonators in which the waveguide and/or other components of the micro-resonator are made of other, in particular non-semiconducting material(s), such as glass, arranged on a chip.

The micro-resonator may comprise silicon nitride. Additionally, or alternatively, the micro-resonator may comprise one or more of aluminium nitride, gallium nitride, lanthanum nitride, silicon carbide, gallium phosphide and/or tantalum oxide.

Furthermore, by the present disclosure, imprinting multiple harmonics of waveguide modulation as a superposition on one another is facilitated. Dispersing the phases of every harmonic of waveguide modulation around the resonator can ensure that the peak excursion to the effective refractive index (corresponding to the waveguide width, or whichever parameter is varied) is as low as possible. This keeps the transfer function from waveguide modulation to mode hybridization in the linear regime (such that the superposition principle holds), which enables multiple harmonics of mode hybridization (meta-dispersion) without significant distortion.

The structure for producing periodic perturbation, such as a Bragg grating, may have been optimized with respect to the at least one of an intended width of the frequency comb and/or the intended intensity distribution within a target width of the frequency comb based on the stipulation.

The structure for producing periodic perturbation may be configured to produce periodic perturbation at least partially by means of one or more of the following: corrugation caused by a varying geometric course and/or a varying profile, in particular a varying diameter (such as a varying waveguide width), of the closed-circuit waveguide, periodic structures arranged adjacent the waveguide in the semi-conductor topography of the micro-resonator, periodic variation of a refractive index of the closed-circuit waveguide by varying one or more of a local temperature, a local pressure, and a local electric potential in the closed-circuit waveguide, which is generatable by one or more functionalities of the high-conversion-efficiency integrated frequency comb device, and/or periodic interruption of at least one of the waveguide core material and a cladding of the closed-circuit waveguide..

The closed-circuit waveguide may define an optical resonance frequency of the micro-resonator.

The structure for producing periodic perturbation may have been designed with respect to at least one of an intended width, in terms of comb lines, of the frequency comb and/or an intended intensity distribution within a target width, in terms of comb lines, of the frequency comb such that the output frequency comb light comprises between 3 and 1024, in particular between 8 and 512 or between 16 and 256 or between 32 and 128, comb lines.

Additionally, or alternatively, the structure for producing periodic perturbation may have been designed with respect to at least one of an intended width, in terms of comb lines, of the frequency comb and/or an intended intensity distribution within a target width, in terms of comb lines, of the frequency comb, wherein an intended frequency spacing between neighboring comb lines of the frequency comb is in the range from 10 GHz to 40 THz, in particular in the range from 100 GHz to 4 THz, more particularly in the range from 400 GHz to 1 THz. In this way, channel separation in telecommunication scenarios is facilitated while also enabling efficient use of an available optical bandwidth.

Additionally, or alternatively, the structure for producing periodic perturbation may have been designed with respect to at least one of an intended width, in terms of comb lines, of the frequency comb and/or an intended intensity distribution within a target width, in terms of comb lines, of the frequency comb such that, at least within the target width, an intended power per comb line is between -40 dBm and 25 dBm, in particular between -20 dBm and 10 dBm, more particularly between -10 dBm and 5 dBm, and/or an intended power between at least two comb lines varies by at most 20 dB, in particular by at most 15 dB, more particularly by at most 10 dBm.

Additionally, or alternatively, the structure for producing periodic perturbation may have been designed with respect to at least one of an intended width, in terms of comb lines, of the frequency comb and/or an intended intensity distribution within a target width, in terms of comb lines, of the frequency comb such that, in a frequency range from 1 MHz to 30 GHz, an integrated relative intensity noise of the comb lines is at most -30 dBc, in particular such that, in a frequency range from 10 MHz to 3 GHz, an integrated relative intensity noise of the comb lines is at most -20 dBc, more particularly such that, in a frequency range from 100 MHz to 1 GHz, an integrated relative intensity noise of the comb lines is at most -10 dBc.

A phase velocity of generated comb lines may have been engineered, on a line-by-line basis, such that conversion efficiency is maximized to target generated microcomb lines and minimized to lines outside the target.

The high-conversion-efficiency integrated frequency comb device may further comprise at least one pump laser source arranged on a substrate of the integrated frequency comb device and configured to provide the pump laser light. The at least one pump laser source may comprise at least one laser diode. Additionally, or alternatively, the at least one pump laser source may be a part of a semiconductor topography of the high-conversion-efficiency integrated frequency comb device.

According to another aspect, a semiconductor device is provided. The semiconductor device comprises at least one and/or at most 20, in particular at most 10, more particularly at most 5, high-conversion-efficiency integrated frequency comb devices as provided herein.

According to another aspect a use of a high-conversion-efficiency integrated frequency comb device is provided. The high-conversion-efficiency integrated frequency comb device is a high-conversion-efficiency integrated frequency comb device as provided herein. In addition, the use of the high-conversion-efficiency integrated frequency comb device comprises a use of the high-conversion-efficiency integrated frequency comb device as an interconnect for a semi-conductor device and/or as a transmission device for optical communications applications.

The use of the high-conversion-efficiency integrated frequency comb device as an interconnect for a semi-conductor device may comprise a use as an interconnect between operatively coupled semiconductor devices of a computing architecture to enable a data transfer between such devices, such as CPU-to-GPU communication, GPU-to-GPU communication, memory-to-GPU communication, etc.

According to another aspect, a method of manufacturing a high-conversion-efficiency integrated frequency comb device is provided. The method comprises producing at least one micro-resonator configured to receive pump laser light from at least one pump laser source, convert at least partially the received pump laser light for generating a laser frequency comb, and output frequency comb light based on the produced laser frequency comb. Producing the at least one micro-resonator comprises producing at least one closed-circuit waveguide integrated in a semi-conductor topography of the micro-resonator, and at least one structure for producing periodic perturbation, such as a Bragg grating, configured to produce mode hybridization via coupling of forwards and backwards travelling modes in the closed-circuit waveguide by means of rapid, in particular sub-wavelength, modulation of a propagation constant of light propagating in the closed-circuit waveguide. Producing the structure for producing periodic perturbation, such as a Bragg grating, is performed in accordance with an intended design with respect to at least one of an intended width, in terms of comb lines, of the frequency comb and/or an intended intensity distribution within a target width, in terms of comb lines, of the frequency comb, based at least partially on the stipulation that a dispersion-loss operator to achieve an ideally flat microcomb according to an exact solution of a generalized Lugiato-Lefever Equation exists in the form $[i\hat{D} + \hat{K}]$, and, as a function of resonator mode index $\mu$, the dispersion-loss operator takes the following generic form:

$$\widehat{D}(\mu = 0) = h$$

$$\widehat{D}(\mu \neq 0) = a + b|\mu| + c\mu^2 + d_3|\mu|^3 + \cdots + d_\infty|\mu|^\infty$$

$$\widehat{K}(\mu = 0) = p$$

$$\widehat{K}(\mu \neq 0) = q + r|\mu| + s\mu^2 + u_3|\mu|^3 + \cdots + u_\infty|\mu|^\infty$$

, wherein *a, b, c, $d_3 \ldots d_\infty$, h, p, q, r, s, $u_3 \ldots u_\infty$* are constants, and $\mu \leq N/2$ for *N* being the number of intended comb lines apart from a potential comb line corresponding to the pump laser light.

The method may further comprise arranging at least one pump laser source on a substrate for the integrated frequency comb device, the pump laser source configured to provide the pump laser light.

Brief Description of the Drawings

Further details and advantages become clear from the drawings and the detailed description. There is shown in:

Figs 1 and 2      high-conversion-efficiency integrated frequency comb devices according to various examples;

Fig. 3      a semiconductor device according to an example;

Fig. 4      a method of manufacturing a high-conversion-efficiency integrated frequency comb device according to an example; and

Fig. 5      meta-dispersion operators and corresponding comb spectra according to various examples.

Detailed Description of the Disclosure

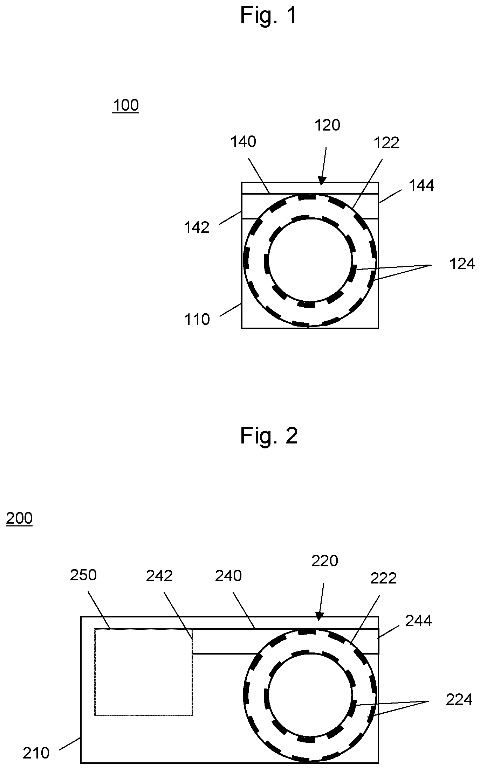

Fig. 1 shows schematically and exemplarily a high-conversion-efficiency integrated frequency comb device 100. The high-conversion-efficiency integrated frequency comb device 100 comprises a support structure 110, a micro-resonator 120, and a bus waveguide 140. The micro-resonator 120 and the bus waveguide 140 are arranged on the support structure 110, which in some examples includes a semiconductor substrate.

The device 100 is configured to receive pump laser light from at least one pump laser source via an input portion 142 of the bus waveguide 140. The bus waveguide 140 is configured to guide the received pump laser light towards, and to in-couple it at least partially into, a closed-circuit waveguide 122 of the micro-resonator 120.

As described in more detail below, the micro-resonator 120 is configured to convert the received pump laser light in such way that a laser frequency comb is generated. Additionally, the micro-resonator 120 is configured to out-couple generated frequency comb light from the closed-circuit waveguide 122 into the bus waveguide 140 for output by means of the device 100 via an output portion 144 of the bus waveguide 140.

The closed-circuit waveguide 122 comprises one or more structures for producing periodic perturbation 124, for example, one or more Bragg gratings, which are configured to produce mode hybridization by coupling forwards and backwards travelling modes in the closed-circuit waveguide 122. To this end, the one or more structures for producing periodic perturbation 124 are configured to produce rapid (as seen from the perspective of light travelling in the closed-circuit waveguide 122), such as sub-wavelength, modulation of a propagation constant of light propagating in the closed-circuit waveguide 122.

In the example of Fig. 1, the one or more structures for producing periodic perturbation 124 are schematically shown arranged over the entire length, especially along the entire internal and external circumferences, of the closed-circuit waveguide 122. In other examples, however, structures for producing periodic perturbation 124 are arranged only at one or more partial lengths, such as at a portion of a circumference, of the closed-circuit waveguide 122.

According to an intended use and/or intended specifications of the device 100, the one or more structures for producing periodic perturbation 124 have been designed, and manufactured, with respect to at least one of an intended width, in terms of comb lines, of the frequency comb and/or an intended intensity distribution within a target width, in terms of comb lines, of the frequency comb. Designing the one or more structures for producing periodic perturbation 124 has been performed using the stipulation that a dispersion-loss operator to achieve an ideally flat microcomb according to an exact solution of a generalized Lugiato-Lefever Equation exists in the form $[i\hat{D} + \hat{K}]$, and, as a function of resonator mode index $\mu$, the dispersion-loss operator takes the following generic form:

$$\widehat{D}(\mu = 0) = h$$

$$\widehat{D}(\mu \neq 0) = a + b|\mu| + c\mu^2 + d_3|\mu|^3 + \cdots + d_\infty|\mu|^\infty$$

$$\widehat{K}(\mu = 0) = p$$

$$\widehat{K}(\mu \neq 0) = q + r|\mu| + s\mu^2 + u_3|\mu|^3 + \cdots + u_\infty|\mu|^\infty$$

, wherein $a, b, c, d_3 \ldots d_\infty, h, p, q, r, s, u_3 \ldots u_\infty$ are constants, and $\mu \leq N/2$ for $N$ being the number of intended comb lines apart from a potential comb line corresponding to the pump laser light.

In some examples, the dispersion-loss operator is assumed as, at least approximately, parabolic for $\mu \neq 0$ and $\leq N/2$. In some of these examples, each of the constants $d_3 \ldots d_\infty, u_3 \ldots u_\infty$ is set as equal to zero. In other ones of the aforesaid examples, one or more of the constants $d_3 \ldots d_\infty, u_3 \ldots u_\infty$ corresponds to a polynomial approximation of a functional form, such as Gaussian, sinc, or hyperbolic sech, which are approximately parabolic near the center, where the first two polynomial orders prevail.

In some examples, the semiconductor structure 110, the micro-resonator 120, and the bus waveguide 140 form parts of an integrated semiconductor topography of the device 100.

In some examples, the one or more structures for producing periodic perturbation 124 have been optimized with respect to the at least one of an intended width of the frequency comb and/or the intended intensity distribution within a target width of the frequency comb using the stipulation.

In some examples, the one or more structures for producing periodic perturbation 124 are configured to produce periodic perturbation at least partially by means of one or more of the following: corrugation caused by a varying geometric course and/or a varying profile, in particular a varying diameter, of the closed-circuit waveguide, periodic posts arranged adjacent the waveguide in the semi-conductor topography of the micro-resonator, periodic variation of a refractive index of the closed-circuit waveguide by varying one or more of a local temperature, a local pressure, and a local electric potential in the closed-circuit waveguide, which is generatable by one or more functionalities of the high-conversion-efficiency integrated frequency comb device, and/or periodic interruption of at least one of the waveguide core material and a cladding of the closed-circuit waveguide.

In some examples, the closed-circuit waveguide 122 defines an optical resonance frequency of the micro-resonator 120. The resonance frequency is defined in some examples, at least partially, by a geometric circuit length of the closed-circuit waveguide 122 and/or a refractive index of a transparent material of the closed-circuit waveguide 122.

In some examples, the one or more structures for producing periodic perturbation 124 have been designed with respect to at least one of an intended width, in terms of comb lines, of the frequency comb and/or an intended intensity distribution within a target width, in terms of comb lines, of the frequency comb such that the output frequency comb light comprises between 3 and 1024, such as between 8 and 512, such as between 16 and 256, such as between 32 and 128, comb lines.

Additionally, or alternatively, in some examples the one or more structures for producing periodic perturbation 124 have been designed with respect to at least one of an intended width, in terms of comb lines, of the frequency comb and/or an intended intensity distribution within a target width, in terms of comb lines, of the frequency comb, wherein an intended frequency spacing between neighboring comb lines of the frequency comb is in the range from 10 GHz to 40 THz, such as in the range from 100 GHz to 4 THz, such as in the range from 400 GHz to 1 THz.

Additionally, or alternatively, in some examples the one or more structures for producing periodic perturbation 124 have been designed with respect to at least one of an intended width, in terms of comb lines, of the frequency comb and/or an intended intensity distribution within a target width, in terms of comb lines, of the frequency comb such that, at least within the target width, an intended power per comb line is between -40 dBm and 25 dBm, such as between -20 dBm and 10 dBm, such as between -10 dBm and 5 dBm, and/or an intended power between at least two comb lines varies by at most 20 dB, in particular by at most 15 dB, more particularly by at most 10 dB.

Additionally, or alternatively, in some examples the one or more structures for producing periodic perturbation 124 have been designed such that, in a frequency range from 1 MHz to 30 GHz, an integrated relative intensity noise of the comb lines is at most -30 dBc, for example such that, in a frequency range from 10 MHz to 3 GHz, an integrated relative intensity noise of the comb lines is at most -20 dBc, for example such that, in a frequency range from 100 MHz to 1 GHz, an integrated relative intensity noise of the comb lines is at most -10 dBc.

In some examples, the high-conversion-efficiency integrated frequency comb device 100 is configured to be used as an interconnect for a semiconductor device.

Fig. 2 shows schematically and exemplarily a high-conversion-efficiency integrated frequency comb device 200. The high-conversion-efficiency integrated frequency comb device 200 comprises a support structure 210, a micro-resonator 220 having a closed-circuit waveguide 122 with one or more structures for producing periodic perturbation 224, and a bus waveguide 240 having an input portion 242 and an output portion 244. Concerning the aforesaid features of the device 200, the above description of the corresponding features of the high-conversion-efficiency integrated frequency comb device 100 applies correspondingly unless otherwise clear from the drawings and/or the following description.

The device 200 further comprises a pump laser source 250. The pump laser source 250 is arranged on the support structure 210, such as a semiconductor substrate, of the integrated frequency comb device 200. The pump laser source 250 is configured to provide pump laser light to the micro-resonator 220. For this purpose, the pump laser source 250 is operatively coupled to the input portion 242 of the bus waveguide 240. Pump laser light which is provided by means of the pump laser source 250 is output by means of the pump laser source 250 and is input to the bus waveguide 240 via the input portion 242.

In some examples, the pump laser source 250 is electrically powered. In some examples, the pump laser source 250 comprises one or more laser diodes. Additionally, or alternatively, in some examples, the pump laser source 250 is part of a semiconductor topography of the device 200.

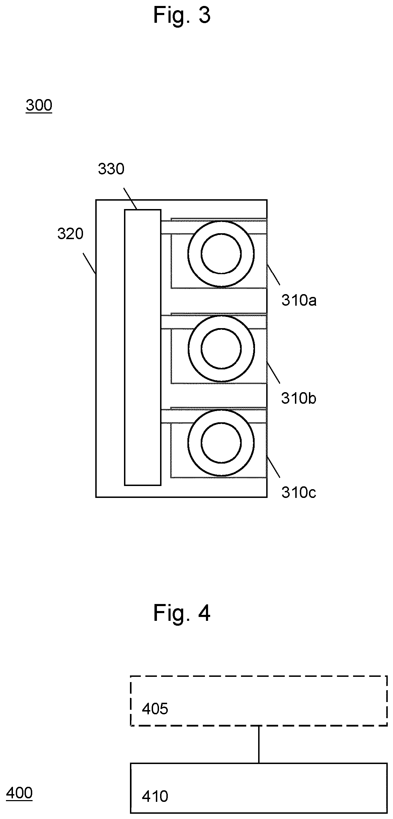

Fig. 3 shows schematically and exemplarily a semiconductor device 300. In the shown example, the semi-conductor device 300 comprises a plurality of high-conversion-efficiency integrated frequency comb devices 310a - 310c, which are arranged on a support structure 320 of the semi-conductor device 300. Each of the high-conversion-efficiency integrated frequency comb devices 310a - 310c is a device according to one or more of the examples described above in connection with devices 100, 200.

In the shown example, the semiconductor device 300 further comprises a functional component 330. The functional component 330 is arranged on the support structure 320 and is operatively coupled to each of the high-conversion-efficiency integrated frequency comb devices 310a - 310c.

In the example illustrated in Fig. 3, the semiconductor device 300 comprises three high-conversion-efficiency integrated frequency comb devices 310a - 310c. In other examples, the semi-conductor device 300 comprises less or more than three high-conversion-efficiency integrated frequency comb devices, such as less than ten high-conversion-efficiency integrated frequency comb devices.

In some examples, the semiconductor device 300 is configured to function as an interconnect for data transfer between multiple operatively coupled semiconductor devices and/or as a transmission device for optical communications applications.

Fig. 4 shows a flow diagram of a method 400 for manufacturing a high-conversion-efficiency integrated frequency comb device. The method 400 is suited, for example, for manufacturing a device such as devices 100, 200 according to the examples described above.

The method 400 comprises producing at least one micro-resonator configured to receive pump laser light from at least one pump laser source, convert at least partially the received pump laser light for generating a laser frequency comb, and output frequency comb light based on the produced laser frequency comb, step 410.

Producing the at least one micro-resonator comprises producing at least one closed-circuit waveguide integrated in a semi-conductor topography of the micro-resonator, and at least one structure for producing periodic perturbation configured to produce mode hybridization via coupling of forwards and backwards travelling modes in the closed-circuit waveguide by means of rapid, in particular sub-wavelength, modulation of a propagation constant of light propagating in the closed-circuit waveguide.

Producing the at least one structure for producing periodic perturbation is performed in accordance with an intended design with respect to at least one of an intended width, in terms of comb lines, of the frequency comb and/or an intended intensity distribution within a target width, in terms of comb lines, of the frequency comb, based at least partially on the stipulation that a dispersion-loss operator to achieve an ideally flat microcomb according to an exact solution of the Lugiato-Lefever Equation exists in the form $[i\hat{D} + \hat{K}]$, and, as a function of resonator mode index $\mu$, the dispersion-loss operator takes the following generic form:

$$\widehat{D}(\mu = 0) = h$$

$$\widehat{D}(\mu \neq 0) = a + b|\mu| + c\mu^2 + d_3|\mu|^3 + \cdots + d_\infty|\mu|^\infty$$

$$\widehat{K}(\mu = 0) = p$$

$$\widehat{K}(\mu \neq 0) = q + r|\mu| + s\mu^2 + u_3|\mu|^3 + \cdots + u_\infty|\mu|^\infty$$

, wherein *a, b, c, $d_3$ ... $d_\infty$, h, p, q, r, s, $u_3$ ... $u_\infty$* are constants, and $\mu \leq N/2$ for *N* being the number of intended comb lines apart from a potential comb line corresponding to the pump laser light.

In some examples, as indicated in Fig. 4 by the dashed lines, the method 400 further comprises arranging at least one pump laser source on a substrate for the integrated frequency comb device, the pump laser source configured to provide the pump laser light, step 405.

In some examples, producing the at least one micro-resonator further comprises programming one or more semiconductor processing machines in accordance with the intended design for automatically producing the semi-conductor topography of the micro-resonator.

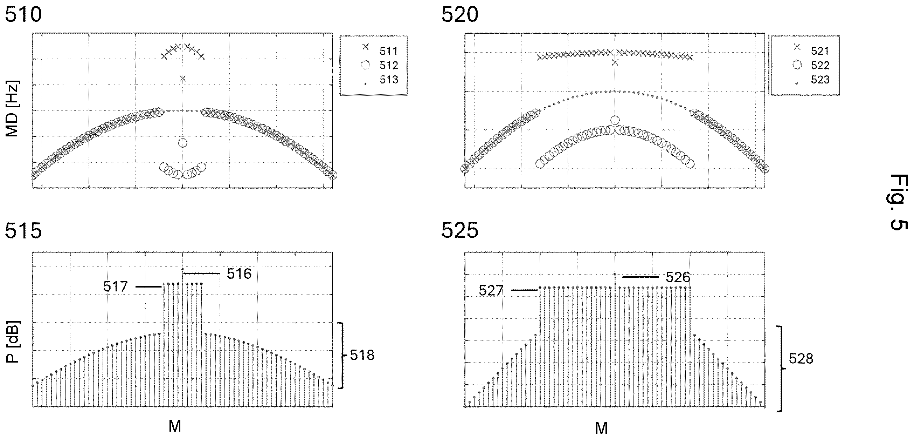

Fig. 5 shows two examples of ideally flat microcomb optical output power spectra, and their corresponding meta-dispersion, MD, operators $\hat{D}(\mu)$, in accordance with the disclosure. In the first example, represented by the diagrams 510, 515, a high conversion efficiency, expressed as output power P, is concentrated into a relatively small number of optical comb lines, corresponding to distinct modes M, within an otherwise spectrally broad natural dispersion environment. In the second example, represented by the diagrams 520, 525, a high conversion efficiency is spread out over a relatively large number of optical comb lines within an otherwise spectrally narrow natural dispersion environment.

In both examples, the natural dispersion operator of the waveguide resonator without meta-dispersion engineering, where $\hat{D}_\mu \simeq \delta\omega_\mu$, is shown with dots, plots 513, 523. The upper and lower hybridized dispersion operators $\hat{D}_\mu \simeq \delta\omega_\mu \pm \gamma_\mu$, resulting from meta-dispersion engineering following from the aforementioned rule for $\hat{D}(\mu)$ are shown with crosses, plots 511, 521, and circles, plots 512, 522, respectively. In the shown examples, the principle dispersion operator responsible for ideally flat microcomb generation, as can be seen in diagrams 515, 525, is the upper hybrid dispersion $\hat{D}_\mu \simeq \delta\omega_\mu + \gamma_\mu$, but, alternatively, could be the lower hybrid dispersion $\hat{D}_\mu \simeq \delta\omega_\mu - \gamma_\mu$ in other examples of the disclosure.

The microcomb spectrum 515, 525, which exits the micro-resonator in each example in either the forwards, or: clockwise, or backwards, or: anticlockwise, directions, to be generated by the respective meta-dispersion operator 510, 520, comprises a residual pump laser line 516, 526, which is partially depleted by conversion efficiency to the generated comb lines as well as dissipation in the micro-resonator due to scattering and material absorption.

Moreover, the microcomb spectrum 515, 525, which exits the micro-resonator in each example in either the forwards, or: clockwise, or backwards, or: anticlockwise, directions, to be generated by the respective meta-dispersion operator 510, 520, comprises a number N of generated comb lines 517, 527 having high conversion efficiency as a result of the meta-dispersion operator, MD.

Residual weak comb lines in the spectral wings having low or no conversion efficiency, ranges 518, 528, exist as a result of resonator modes outside the N comb modes that have not had meta-dispersion engineered applied.

**Claims**

1. High-conversion-efficiency integrated frequency comb device (100; 200; 310a - 310c) comprising at least one micro-resonator (120; 220) configured to receive pump laser light from at least one pump laser source, convert at least partially the received pump laser light for generating a laser frequency comb, and output frequency comb light based on the produced laser frequency comb, wherein:

   - the micro-resonator (120; 220) comprises at least one closed-circuit waveguide (122; 222) integrated in a semi-conductor topography of the micro-resonator (120; 220),
   - the closed-circuit waveguide (122; 222) comprises at least one structure for producing periodic perturbation (124; 224) configured to produce mode hybridization via coupling of forwards and backwards travelling modes in the closed-circuit waveguide (122; 222) by means of rapid, in particular sub-wavelength, modulation of a propagation constant of light propagating in the closed-circuit waveguide (122; 222), and
   - the structure for producing periodic perturbation (124; 224) has been designed with respect to at least one of an intended width, in terms of comb lines, of the frequency comb and/or an intended intensity distribution within a target width, in terms of comb lines, of the frequency comb, based at least partially on the stipulation that a dispersion-loss operator to achieve an ideally flat microcomb according to an exact solution of a generalized Lugiato-Lefever Equation exists in the form $[i\hat{D} + \hat{K}]$, and, as a function of resonator mode index $\mu$, the dispersion-loss operator takes the following generic form:

$$\widehat{D}(\mu = 0) = h$$

$$\widehat{D}(\mu \neq 0) = a + b|\mu| + c\mu^2 + d_3|\mu|^3 + \cdots + d_\infty|\mu|^\infty$$

$$\widehat{K}(\mu = 0) = p$$

$$\widehat{K}(\mu \neq 0) = q + r|\mu| + s\mu^2 + u_3|\mu|^3 + \cdots + u_\infty|\mu|^\infty$$

, wherein $a, b, c, d_3 \dots d_\infty, h, p, q, r, s, u_3 \dots u_\infty$ are constants, and $\mu \leq N/2$ for $N$ being the number of intended comb lines apart from a potential comb line corresponding to the pump laser light.

2. High-conversion-efficiency integrated frequency comb device according to claim 1, wherein the structure for producing periodic perturbation (124; 224) has been optimized with respect to the at least one of an intended width of the frequency comb and/or the intended intensity distribution within a target width of the frequency comb based on the stipulation.

3. High-conversion-efficiency integrated frequency comb device according to claim 1 or claim 2, wherein the structure for producing periodic perturbation (124; 224) is configured to produce periodic perturbation at least partially by means of one or more of the following:

- corrugation caused by a varying geometric course and/or a varying profile, in particular a varying diameter, of the closed-circuit waveguide (122; 222),
- periodic structures arranged adjacent the waveguide (122; 222) in the semi-conductor topography of the micro-resonator (120; 220),
- periodic variation of a refractive index of the closed-circuit waveguide (122; 222) by varying one or more of a local temperature, a local pressure, and a local electric potential in the closed-circuit waveguide (122; 222), which is generatable by one or more functionalities of the high-conversion-efficiency integrated frequency comb device, and/or
- periodic interruption of at least one of the waveguide core material and a cladding of the closed-circuit waveguide (122; 222).

4. High-conversion-efficiency integrated frequency comb device according to any one of the preceding claims, wherein the closed-circuit waveguide (122; 222) defines an optical resonance frequency of the micro-resonator (120; 220).

5. High-conversion-efficiency integrated frequency comb device according to any one of the preceding claims, wherein the structure for producing periodic perturbation (124; 224) has been designed with respect to at least one of an intended width, in terms of comb lines, of the frequency comb and/or an intended intensity distribution within a target width, in terms of comb lines, of the frequency comb such that the output frequency comb light comprises between 3 and 1024 comb lines.

6. High-conversion-efficiency integrated frequency comb device according to any one of the preceding claims, wherein the structure for producing periodic perturbation (124; 224) has been designed with respect to at least one of an intended width, in terms of comb lines, of the frequency comb and/or an intended intensity distribution within a target width, in terms of comb lines, of the frequency comb such that an intended frequency spacing between neighboring comb lines of the frequency comb is in the range from 10 GHz to 40 THz.

7. High-conversion-efficiency integrated frequency comb device according to any one of the preceding claims, wherein the structure for producing periodic perturbation (124; 224) has been designed with respect to at least one of an intended width, in terms of comb lines, of the frequency comb and/or an intended intensity distribution within a target width, in terms of comb lines, of the frequency comb such that, at least within the target width, an intended power per comb line is between -40 dBm and 25 dBm and/or an intended power between at least two comb lines varies by at most 20 dB.

8. High-conversion-efficiency integrated frequency comb device according to any one of the preceding claims, wherein the structure for producing periodic perturbation (124; 224) has been designed with respect to at least one of an intended width, in terms of comb lines, of the frequency comb and/or an intended intensity distribution within a target width, in terms of comb lines, of the frequency comb such that, in a frequency range from 1 MHz to 30 GHz, an integrated relative intensity noise of the comb lines is at most -30 dBc.

9. High-conversion-efficiency integrated frequency comb device according to any one of the preceding claims, wherein a phase velocity of generated comb lines has been engineered, on a line-by-line basis, such that conversion efficiency is maximized to target generated microcomb lines and minimized to lines outside the target.

10. High-conversion-efficiency integrated frequency comb device according to any one of the preceding claims further comprising at least one pump laser source (250) arranged on a substrate (210) of the integrated frequency comb device (200) and configured to provide the pump laser light.

**11.** Semiconductor device (300) comprising at least one and/or at most 20 high-conversion-efficiency integrated frequency comb devices (310) according to any one of the preceding claims.

**12.** Use of a high-conversion-efficiency integrated frequency comb device (100; 200; 310) according to any one of claims 1 to 9 as an interconnect for a semiconductor device and/or as a transmission device for optical communications applications.

**13.** Use according to claim 12, wherein the use of the high-conversion-efficiency integrated frequency comb device (100; 200; 310) as an interconnect for a semiconductor device comprises a use of the high-conversion-efficiency integrated frequency comb device (100; 200; 310) as an interconnect between operatively coupled semiconductor devices of a computing architecture to enable a data transfer between such devices.

**14.** Method (400) of manufacturing a high-conversion-efficiency integrated frequency comb device (100; 200; 310a - 310c), the method comprising producing (410) at least one micro-resonator (120; 220) configured to receive pump laser light from at least one pump laser source, convert at least partially the received pump laser light for generating a laser frequency comb, and output frequency comb light based on the produced laser frequency comb, wherein producing (410) the at least one micro-resonator (120; 220) comprises:

- producing at least one closed-circuit waveguide (122; 222) integrated in a semi-conductor topography of the micro-resonator (120; 220), and at least one structure for producing periodic perturbation (124; 224) configured to produce mode hybridization via coupling of forwards and backwards travelling modes in the closed-circuit waveguide (122; 222) by means of rapid, in particular sub-wavelength, modulation of a propagation constant of light propagating in the closed-circuit waveguide (122; 222),

wherein producing the structure for producing periodic perturbation (124; 224) is performed in accordance with an intended design with respect to at least one of an intended width, in terms of comb lines, of the frequency comb and/or an intended intensity distribution within a target width, in terms of comb lines, of the frequency comb, based at least partially on the stipulation that a dispersion-loss operator to achieve an ideally flat microcomb according to an exact solution of a generalized Lugiato-Lefever Equation exists in the form $[i\hat{D} + \hat{K}]$, and, as a function of resonator mode index $\mu$, the dispersion-loss operator takes the following generic form:

$$\hat{D}(\mu = 0) = h$$

$$\hat{D}(\mu \neq 0) = a + b|\mu| + c\mu^2 + d_3|\mu|^3 + \cdots + d_\infty|\mu|^\infty$$

$$\hat{K}(\mu = 0) = p$$

$$\hat{K}(\mu \neq 0) = q + r|\mu| + s\mu^2 + u_3|\mu|^3 + \cdots + u_\infty|\mu|^\infty$$

wherein $a, b, c, d_3 \ldots d_\infty, h, p, q, r, s, u_3 \ldots u_\infty$ are constants, and $\mu \leq N/2$ for $N$ being the number of intended comb lines apart from a potential comb line corresponding to the pump laser light.

**15.** Method according to claim 14, further comprising:

- arranging (405) at least one pump laser source (250) on a substrate (210) for the integrated frequency comb device (200), the pump laser source (250) configured to provide the pump laser light.

## Fig. 1

## Fig. 2

# Fig. 3

300

330

320

310a

310b

310c

# Fig. 4

405

410

400

Fig. 5

Europäisches
Patentamt

European
Patent Office

Office européen
des brevets

# EUROPEAN SEARCH REPORT

Application Number

EP 25 17 3922

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/248368 A1 (YU SU-PENG [US] ET AL) 25 July 2024 (2024-07-25) * abstract; figures 1,2,12-17,22a,29,44a,44b * * paragraphs [0056], [0061], [0131] - [0133] * | 1-15 | INV. G02F1/35 G02F1/365 |
| X | ERWAN LUCAS ET AL: "Tailoring microcombs with inverse-designed, meta-dispersion microresonators", ARXIV.ORG, CORNELL UNIVERSITY LIBRARY, 201 OLIN LIBRARY CORNELL UNIVERSITY ITHACA, NY 14853, 17 February 2023 (2023-02-17), XP091440661, * the whole document * | 1-15 | |
| A | HAIZHONG WENG ET AL: "Directly accessing octave-spanning dissipative Kerr soliton frequency combs in an AlN microring resonator", ARXIV.ORG, CORNELL UNIVERSITY LIBRARY, 201 OLIN LIBRARY CORNELL UNIVERSITY ITHACA, NY 14853, 20 December 2020 (2020-12-20), XP081923710, DOI: 10.1364/PRJ.427567 * the whole document * | 1-15 | TECHNICAL FIELDS SEARCHED (IPC) G02F |
| A | ZHEN JIANG ET AL: "Topological dissipative Kerr soliton combs in a valley photonic crystal resonator", ARXIV.ORG, CORNELL UNIVERSITY LIBRARY, 201 OLIN LIBRARY CORNELL UNIVERSITY ITHACA, NY 14853, 25 July 2023 (2023-07-25), XP091573306, * the whole document * | 1-15 | |

-/--

The present search report has been drawn up for all claims

| Place of search | Date of completion of the search | Examiner |
|---|---|---|
| The Hague | 6 October 2025 | Beugin, Anne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 25 17 3922

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YAN JIN ET AL: "The bandgap-detuned excitation regime in photonic-crystal resonators", ARXIV.ORG, CORNELL UNIVERSITY LIBRARY, 201 OLIN LIBRARY CORNELL UNIVERSITY ITHACA, NY 14853, 17 April 2024 (2024-04-17), XP091731786, * the whole document * | 1-15 | |
| A | LUGIATO L A ET AL: "From the Lugiato-Lefever equation to microresonator based soliton Kerr frequency combs", ARXIV.ORG, CORNELL UNIVERSITY LIBRARY, 201 OLIN LIBRARY CORNELL UNIVERSITY ITHACA, NY 14853, 26 November 2018 (2018-11-26), XP081041579, DOI: 10.1098/RSTA.2018.0113 * the whole document * | 1-15 | |

TECHNICAL FIELDS
SEARCHED      (IPC)

The present search report has been drawn up for all claims

| Place of search | Date of completion of the search | Examiner |
|---|---|---|
| The Hague | 6 October 2025 | Beugin, Anne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

# EP 4 764 689 A1

## ANNEX TO THE EUROPEAN SEARCH REPORT
## ON EUROPEAN PATENT APPLICATION NO.

EP 25 17 3922

This annex lists the patent family members relating to the patent documents cited in the above-mentioned European search report.
The members are as contained in the European Patent Office EDP file on
The European Patent Office is in no way liable for these particulars which are merely given for the purpose of information.

06-10-2025

| Patent document cited in search report | Publication date | Patent family member(s) | Publication date |
|---|---|---|---|
| US 2024248368 A1 | 25-07-2024 | NONE | |

EPO FORM P0459

For more details about this annex : see Official Journal of the European Patent Office, No. 12/82

19